(19) Europäisches Patentamt / European Patent Office / Office européen des brevets

(11) **EP 3 150 026 B1**

(12) **EUROPEAN PATENT SPECIFICATION**

(45) Date of publication and mention
of the grant of the patent:
**11.11.2020  Bulletin 2020/46**

(21) Application number: **15723489.9**

(22) Date of filing: **13.05.2015**

(51) Int Cl.:
**H05B 45/37** *(2020.01)*

(86) International application number:
**PCT/EP2015/060688**

(87) International publication number:
**WO 2015/180969 (03.12.2015 Gazette 2015/48)**

(54) **LED DRIVER CIRCUIT, LED CIRCUIT AND DRIVE METHOD**

LED-TREIBERSCHALTUNG, LED-SCHALTUNG UND ANSTEUERUNGSVERFAHREN

CIRCUIT D'ATTAQUE DE DEL, CIRCUIT DE LED ET PROCÉDÉ D'ENTRAÎNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2014  PCT/CN2014/078902**
**03.10.2014  EP 14187643**
**02.04.2015  IN 1773CH2015**

(43) Date of publication of application:
**05.04.2017  Bulletin 2017/14**

(73) Proprietor: **Signify Holding B.V.**
**5656 AE Eindhoven (NL)**

(72) Inventors:
• **LONG, Huojun**
**NL-5656 AE Eindhoven (NL)**
• **TOMAR, Akhilesh Singh**
**NL-5656AE Eindhoven (NL)**
• **FU, Jie**
**NL-5656AE Eindhoven (NL)**
• **KONG, Jianhong**
**NL-5656AE Eindhoven (NL)**
• **SUN, Xiao**
**NL-5656AE Eindhoven (NL)**

(74) Representative: **Verweij, Petronella Daniëlle**
**Signify Netherlands B.V.**
**Intellectual Property**
**High Tech Campus 7**
**5656 AE Eindhoven (NL)**

(56) References cited:
**EP-A1- 2 477 459      EP-A2- 2 381 742**
**WO-A2-2010/106375   US-A1- 2006 119 329**
**US-A1- 2014 117 964   US-A1- 2014 119 059**

**Description**

FIELD OF THE INVENTION

This invention is generally related to light emitting diode based lighting, and in particular which is compatible with variable input voltage based lighting technologies. The concept is not only used in led lighting, also can be used in other applications, such as industry power supply, consumer electronics, etc.

BACKGROUND OF THE INVENTION

In this description and claims, the term "LED" will be used to denote both organic and inorganic light emitting diodes (LEDs), and the invention can be applied to both categories. LEDs are current driven lighting units. They are driven using an LED driver which delivers a desired current to the LED.

The required current to be supplied varies for different lighting units, and for different configurations of lighting unit. The latest LED drivers are designed to have sufficient flexibility that they can be used for a wide range of different lighting units, and for a range of numbers of lighting units.

A switched mode power supply circuits, and ringing choke converter (RCC) circuits in particular are widely used as light emitting diode (LED) driver circuits and chargers because of their low cost. However they are not widely used in applications which require high performance. Ringing choke converter circuits designs which produce a high power factor, a low total harmonic distortion (THD) and a good line regulation at the same time are complex and difficult to design. RCC circuits which achieve high power factor and low THD performance are known. However such circuits have poor line regulation in that a varying input voltage significantly affects the output voltage of the driver circuit.

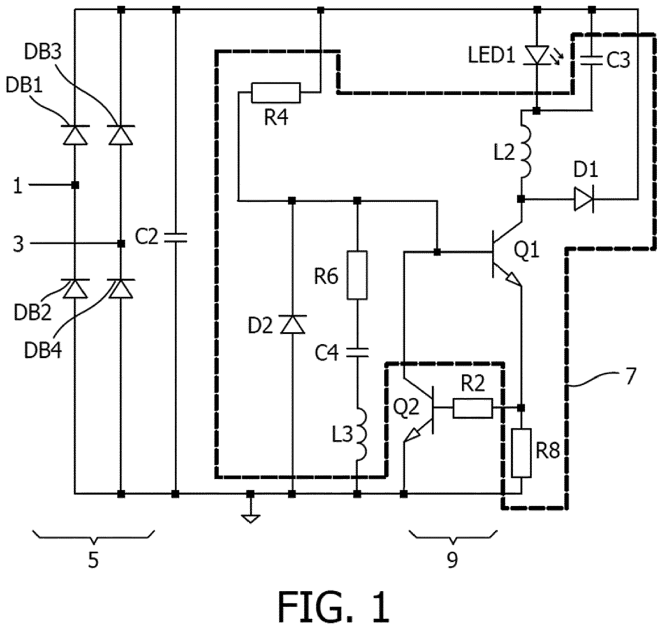

It is known to equip such ringing choke converter circuits with a peak current control. These RCC circuits have a peak current which is typically clamped by a voltage reference. An example RCC circuit with clamped peak current control is shown in Figure 1. The current limit within the example RCC circuit is implemented by the sensing resistor R8 and transistor Q2 which draws base current of transistor Q1 away when the current through the sensing resistor R8 generates a voltage larger than the base-emitter voltage (Vbe) of the transistor Q2.

WO2010106375 and EP2381742A2 have a phase-cut detecting unit for detecting the phase cut condition of the input power and in turn use the phase cut condition to control the power converting unit. More specifically, the driving power is dimmed in accordance with phase cut condition of the input power. This does not relate to THD performance which requires the driving power curve follows the input power curve in phase: for example in the peak of input power the driving power is also high. US2014/117964A1 discloses a boost converter in which load current is regulated by monitoring the load current and the current in the boost inductor L1.

SUMMARY OF THE INVENTION

However although improving the line regulation performance, the RCC circuits with peak current control produce significantly poorer power factor and THD performance. Furthermore such clamped peak current RCC circuits have a bad electromagnetic compatibility since the peak current limit introduces a differential current into the input current, which means the load current is limited into a saddle shape but the input current is still constant due to ballast, thus the current difference will flow into an input capacitor and causes a large resonant spike on the input capacitor. This is particularly a problem with regards to implementing such driver circuits in T-LED applications.

It would be advantageous to enable the peak current of the converter to follow the input power wave shape thereby enabling the improvement in THD and Power Factor (PF). It would be further advantageous that a simple and low cost circuit can provide such performance.

To address the above concern, the invention is defined by the claims.

According to an embodiment of the invention, there is provided a driver circuit, in one of its suitable applications, for driving a light emitting diode arrangement, comprising: an input for receiving an input power; an input capacitor for buffering the input power; a switched mode power converter for supplying a driving current from the buffered input power; a current limiter coupled to the switched mode power converter, wherein the current limiter is configured to control the switched mode power converter to limit the driving current at a driving load limit, wherein the current limiter comprises a controllable switch configured to control the switched mode power converter via operating a power switch (Q1) of the switched mode power converter; and a control element configured to sense a variation of the input power, the control element coupled to the controllable switch and adjusting the controllable switch based on the variation of the input power, such that the current limiter is configured to adjust the driving load limit based on the variation of the input power, wherein said control element comprises: a current sensing element in series in the line between the input capacitor and the input.

In this embodiment, the variation of the input power is sensed by the current sensing element since the input capacitor provides variation information of the input power. Thus at a low cost and simple circuit, the peak current of the converter can follow the input power wave shape.

In a further embodiment, said current sensing element is adapted to sense the variation rate of the voltage of the input power. The input capacitor generates a current that is proportional to a dv/dt of the input voltage, and this current flows through the current sensing element. In turn the variation rate of the voltage of the input power can be retrieved at a low cost and simple circuit.

In a further embodiment, the current limiter is coupled to the current sensing element (R1) and is configured to increase the driving load limit when the variation rate of the input power is low and configured to decrease the driving load limit when the variation rate of the input power is high. In this embodiment, the input power is normally a sine wave shape, at zero degree phase the voltage is lowest and has the largest variation rate, so at this instant the driving load limit is decreased to match the low driving current with the lowest voltage; at a peak of the input voltage, the variation rate is as low as zero and in turn the driving load limit is increased to match the high driving current with the peak voltage. Thus the driving load limit is reverse with the variation (first order derivative) of the input voltage thus it can follow the input voltage. What is to be noted is that the term low and high are for describing the relative magnitude comparison between the variation rates, not for describing an absolute value of the variation rates.

In one embodiment, the switched mode power converter may comprise a ringing choke converter.

These examples thus provide a low cost converter with low component count.

In one embodiment, the controllable switch can be operated in an emitter-driven way, wherein the current sensing element comprises a resistor in series between the low potential input and the input capacitor, and the current output terminal of the controllable switch is coupled to a ground terminal via the resistor and to the low potential input, one end of the input capacitor connects to the ground, a control terminal of the controllable switch is coupled to the ground terminal via a current sensing element of the current limiter through which the driving current flows, and a current input terminal of the controllable switch is coupled to a control terminal of the switched mode power converter.

In this embodiment, the current output terminal of the controllable switch has a potential that is in phase with the input voltage, therefore the controllable switch draws current from the control terminal of the switched mode power converter in a manner reversed from the input voltage changes. Also, using a resistor as the current sensing element is low cost.

In alternative embodiment, the controllable switch can be operated in a base-driven way. The resistor is in series between the low potential input and the input capacitor, the low potential input connects to the ground, and the control terminal of the controllable switch is coupled to the ground and the low potential input via the resistor and is coupled to one end of the input capacitor.

In this embodiment, the control terminal of the controllable switch has a potential that is in reversed phase as the input voltage, thus the controllable switch draws current from the control terminal of the switched mode power converter in a manner reversed from the input voltage changes.

In a further embodiment, said control terminal is isolated from the driving current. In this embodiment, at 0-90 degree phase, the driving current is limited by the current limiter in accordance with the phase of the input voltage; and at 90-180 degree phase, the input voltage decreases and provides less current to the control terminal of the switched mode power converter thus limiting the driving current. In general, an open loop circuit without means for detecting the driving current is provided at a low cost.

In one embodiment, the controllable switch is a transistor and the current output terminal of the controllable switch is the emitter of the transistor. Alternatively, the controllable switch may be a MOSFET and the current output terminal of the controllable switch is the source of the MOSFET. The examples in the following description describe a transistor as an example controllable switch. The control element in such examples is able to bias the emitter of the transistor or the base of the transistor according to the variation of the voltage of the input power. Therefore the emitter voltage can be biased and achieve a high power factor and low total harmonic distortion. The power factor and THD produced being improved over a control element using an unbiased current limiter transistor.

The input may comprise a high potential input and a low potential input, and further may comprise an input capacitor across the high potential input and a low potential input, and between the input and the switched mode power converter.

The control element may comprise a resistor in series between the low potential input and the input capacitor, wherein the current output terminal of the controllable switch may be connected to the low potential input and to a ground terminal via the resistor, a control terminal of the controllable switch may be connected to the ground terminal via a current sensing element of the current limiter through which the driving current flows, and a current input terminal of the controllable switch may be coupled to a control terminal of the switched mode power converter. The current input terminal of the controllable switch may be a collector of the transistor. The control terminal of the controllable switch may be a base of the transistor. Alternatively, the controllable switch is implemented by MOSFET. The current input terminal of the controllable switch may the drain of the MOSFET. The control terminal of the controllable switch may the gate of the MOSFET.

The resistor thus compensates the voltage reference by generating a potential between the filtered low potential input and the control terminal of the controllable switch, the current output terminal of the controllable switch being further coupled to the low potential input. Namely a reference voltage bias is provided between the control terminal and the current output terminal of the controllable switch.

The control element may comprise a diode in parallel with the resistor in series between the low potential input and the input capacitor, and said diode is forwarded from the input capacitor to the low potential input.

The diode thus in examples shown herein keeps the circuit operating normally even when a large surge current flows through the biasing resistor. In other words the capacitor clamps an input resistor potential.

A driver circuit may further comprise a line regulation controller, the line regulation controller may be configured to sense the voltage of the input power and bias a control terminal of the controllable switch based on the voltage of the power via providing at the control terminal a bias voltage that increases as the voltage of the input power increases.

In this way examples achieve a good line regulation by controlling the current limiter to advance the turn off threshold of the switched mode power converter.

The line regulation controller may comprise a control terminal biasing resistor located between an auxiliary power source and the control terminal of the controllable switch, the auxiliary power source being based on the voltage of the input power, wherein the driver circuit further comprises: a choke inductor in series with the power switch of the switched mode power converter; and an auxiliary winding coupled to said choke inductor, said auxiliary winding being adapted for providing the auxiliary power supply.

In this way the current supplied by the filtered high potential input to the control terminal of the controllable switch realizes the good line regulation. This is because when the input line voltage is high, the voltage of the auxiliary power source is increased. The high voltage of the auxiliary power source increases the control terminal current of the controllable switch. The increase of the control terminal current of the controllable switch then advances the turn on of the controllable switch, and in turn advances the off moment of the switched mode power converter coupled to the controllable switch, and reduces the peak current to balance the high line voltage energy.

In a further embodiment, the driver circuit may further comprise a diode forwarded from a control terminal of the current limiter to a control terminal of a power switch of the switched mode power converter. This diode is for clamping the control terminal of the current limiter at a low voltage in case the power switch of the switched mode power converter is turned off, thereby preventing the current limiter acting even before the turning on of the power switch and ensure the power switch can be turned on.

A lighting circuit may comprise: a driver circuit as described herein; and a light emitting diode arrangement coupled to the switched mode power converter of the driver circuit, and wherein the driver circuit comprises a smoothing capacitor across the light emitting diode arrangement.

According to a second aspect there is provided a method of driving a light emitting diode arrangement, comprising: receiving an input power; supplying a driving current using a switched mode power supply from the buffered input power; buffering the input power by an input capacitor; limiting the driving current at a driving load limit using a current limiter, by controlling the switched mode power supply, wherein a controllable switch controls the switched mode power supply; sensing a variation of the input power by a control element coupled to the input capacitor via using a resistor in series in the line between the input capacitor and the input power; and adjusting the controllable switch controlling the switched mode power supply based on the variation of the input power, such that the current limiter is configured to adjust the driving load limit based on the variation of the input power.

In a further embodiment, sensing the variation of the input power comprises using a resistor in series in the line between the input capacitor and the input power, thereby the current through the input capacitor, indicative of the variation rate of a voltage of the input power, flows through said resistor and forms a corresponding voltage across the resistor.

In a further embodiment, supplying a driving current comprises supplying a current using a ringing choke converter, and limiting the driving current comprises increasing the driving load limit when variation rate of the voltage of the input power is low and decreasing the driving load limit when the variation rate of the voltage of the input power is high.

In one embodiment, the controllable switch is a transistor and the current output terminal of the controllable switch is the emitter of the transistor. Alternatively, the controllable switch may be a MOSFET and the current output terminal of the controllable switch is the source of the MOSFET.

Supplying a driving current may comprise supplying a current using a ringing choke converter.

Receiving an input power may comprise receiving a rectified mains power signal. Receiving an input power may comprise receiving a high potential input and a low potential input, wherein an input capacitor is located across the high potential input and a low potential input, and between the input and the switched mode power converter.

Sensing a variation of the input power by a control element may comprise sensing the variation of the input power by a resistor located in series between the low potential input and the input capacitor, and wherein the method further comprises coupling the current output of the controllable switch to the low potential input and to a ground terminal via the resistor; coupling a control terminal of the controllable switch to the ground terminal via a current sensing element of the current limiter through which the driving current flows, and coupling a current input of the controllable switch to a control terminal of the switched mode power converter.

The current input terminal of the controllable switch may be a collector of the transistor. The control terminal of the controllable switch may be a base of the transistor. Alternatively, the controllable switch is implemented by MOSFET. The current input terminal of the controllable switch may the drain of the MOSFET. The control terminal of the controllable switch may the gate of the MOSFET.

A method may further comprise providing a surge load bypass by a diode located in parallel with the resistor in series between the low potential input and the input capacitor, and said diode is forwarded from the input capacitor to the low potential input.

A method may further comprise: sensing the input power potential; and biasing a control terminal of the controllable switch based on the input power potential, so to control line regulation of the driving potential.

Biasing the control terminal of the controllable switch may comprise locating a base biasing resistor between an auxiliary power source and the control terminal of the controllable switch, the auxiliary power source being derived from the input power potential.

These and other aspects of the invention will be apparent from and elucidated with reference to the embodiment(s) described hereinafter.

BRIEF DESCRIPTION OF THE DRAWINGS

Examples of the invention will now be described in detail with reference to the accompanying drawings, in which:

Figure 1 shows an example prior art clamped peak current RCC LED driver circuit;
Figure 2 shows an example prior art clamped peak current RCC LED driver circuit input average current and transistor current waveforms;
Figure 3 shows an example prior art clamped peak current RCC LED driver circuit input capacitor potential waveforms;
Figure 4 shows an example clamped peak current RCC LED driver circuit according to some embodiments;
Figure 5 shows an example clamped peak current RCC LED driver circuit current and potential waveforms;
Figures 6 and 7 show example integrations of EMI filters within embodiments of the invention;
Figure 8 shows an alternative embodiment of the invention wherein the control element is coupled to a control terminal of a switch in the current limiter; and
Figure 9 shows the curve of the input voltage and Vbe of the control element.

DETAILED DESCRIPTION OF THE EMBODIMENTS

The embodiments as described herein provide a driver circuit, in one of its suitable applications, for driving a light emitting diode arrangement. The driving circuit as described herein comprises an input for receiving an input power and an input capacitor for buffering the input power. Furthermore the driving circuit comprises a switched mode power converter configured to supply a driving current from the input. Associated with the switched mode converter is a current limiter coupled to the switched mode power converter. The current limiter is configured to control the switched mode power converter to limit the driving current at a driving load limit. As described herein the current limiter comprises a controllable switch configured to control the switched mode power converter. The driving circuit furthermore comprises a control element configured to sense a variation of the input power. The control element is in embodiments coupled to the controllable switch and is configured to adjust the terminal potential of the controllable switch based on the variation of the input power. In such a way the current limiter can be configured to adjust the driving load current limit based on the variation of the input power. The control element comprises a resistor in series in the line between the input capacitor and the input.

The following description features a transistor as an example controllable switch. Thus in the following description a control terminal of the controllable switch is a base of the transistor, the current input terminal of the controllable switch is the collector of the transistor and the current output terminal of the controllable switch is the emitter of the transistor. However it would be understood that any suitable controllable switch or element achieving the function of switching can be employed in some embodiments. For example the controllable switch in some embodiments is a PNP transistor rather than the NPN transistor described herein. Furthermore in some embodiments the controllable switch can in some embodiments be implemented in FET technology, such as for example a n-channel MOSFET, wherein the control terminal of the controllable switch is a gate of the MOSFET, the current input terminal of the controllable switch is the source of the MOSFET and the current output terminal of the controllable switch is the drain of the MOSFET.

As is described herein in further detail hereafter the control element is therefore able to bias the transistor's terminal according to the variation of the input power. In such a manner a circuit can achieve an improved power factor and total harmonic distortion performance over a driver circuit comprising a control element using an unbiased current limiter transistor such as described herein. This is because the high levels if current from the ballast are be allowed to pass the power switch since the current limit at that time are also high, and therefore the input capacitor is not charged to an over-high value.

It would be appreciated that as described herein the switched mode power converter comprises a ringing choke converter (RCC) circuit. However any suitable switched mode power converter circuit can be used using similar teaching as described herein. For example, for buck or boost converter with a current limiter, embodiments of the invention can be applicable to adjust the limit of the current limiter according the variation of the input power.

Furthermore in the following embodiments the input comprises a high potential input (where the current flows in) and a low potential input (where the current flows out), and further comprises an input capacitor as a buffer capacitor across the high potential input and a low potential input, and between the input and the switched mode power converter. It would be understood that in some embodiments the terms high and low potential are relative ones and are defined with respect to a positive magnitude potential difference (with reference to a notional ground or earth potential) and that similar teaching and circuits can be applied to circuits defined with respect to a negative magnitude potential difference.

Figure 1 shows an example prior art clamped peak current RCC LED driver circuit. As described herein the typical RCC circuit with peak current control is a known LED driver circuit. However these types of circuit, although producing an acceptable line regulation performance, produce poor or unacceptable power factor (PF) and total harmonic distortion (THD) performance.

The example driver circuit comprises a first or input part 5 which receives an alternating current (such as a 230V or 115V) input supply (otherwise known as a mains supply) at differential inputs 1, 3 and generates a suitable high and low potential inputs to the switched mode power converter part 7.

The input part 5 therefore rectifies the alternating power supply into a rectified direct current or DC power which is passed to the switched mode power converter part 7. In the example shown in Figure 1 the input part 5 comprises a diode rectifier or bridge (DB1, DB2, DB3, DB4) which generate a full wave rectified output.

Located between the input part 5 and switched mode power converter part 7 comprises an input capacitor C2 located across the high and low potential inputs. The input capacitor C2 in some embodiments is a 200nF capacitor. The function of the input capacitor C2 is for example smoothing the rectified DC as a buffer capacitor.

The driver circuit furthermore comprises a switched mode power converter, in this circuit being an RCC, part 7 which converts the input power into a high frequency driving current to power the LED, shown in Figure 1 by LED1. The switched mode power converter (or RCC) part 7 in some embodiments comprises a transistor Q1 which is coupled and biased by a first network. The first network comprises a resistor R4 coupled between the high potential input and the base of the transistor Q1, a diode D2 coupled between the base of the transistor Q1 and the low potential input and forwarded towards the base of the transistor Q1 (in other words with the cathode of the diode coupled to the base of the transistor Q1), a resistor R6 coupled between the base of the transistor Q1 and a capacitor C4, a capacitor C4 coupled between the resistor R6 and a first terminal of the inductor L3, and a inductor L3 coupled between the second terminal of a capacitor C4 and the low potential input. In other words the diode D2 is in parallel with the series combination of the resistor R6, the capacitor C4 and the inductor L3.

The collector of the transistor Q1 is further coupled to a diode D1. The diode D1 is forwarded to the high potential input (or bus potential) and is configured with a anode coupled to the collector of the transistor Q1 and a cathode coupled to the high potential input.

The RCC part 7 further comprises a choke inductor L2 configured with one terminal coupled to the collector of the transistor Q1 and with the other terminal to a network comprising the parallel combination of a load capacitor C3 and the load, the light emitting diode LED1. The load capacitor C3 is configured between the other terminal of the choke inductor L2 and the high potential input. The light emitting diode load LED1, in parallel with the load capacitor C3, is located between (and forwarded towards) the other terminal of the choke inductor L2 and (anode coupled to) the high potential input.

The driver circuit further comprises a peak current limiter 9 in the form of a transistor Q2, and resistors R2 and R8. The emitter of the transistor Q1 is further coupled to the resistor R8. The resistor R8 being located between the emitter of the transistor Q1 and the low potential input (or ground terminal).The transistor Q2 is configured with a collector of Q2 coupled to the base of Q1, an emitter of Q2 coupled to the low potential input (or ground terminal) and the base of Q2 coupled to the emitter of the transistor Q1 via the resistor R2. The current flowing through R8, as well as Q1, is limited as a value forming a potential across R8 equal to the opening threshold of Q2, namely Vbe of Q2. In this way, the transistor current through the power switch Q1 is limited.

The peak current limiter 9 although limiting the current and therefore producing a suitable line regulation performance introduces a first order differential current -di/dt into the input current which generates a large resonant spike on the input capacitor C2.

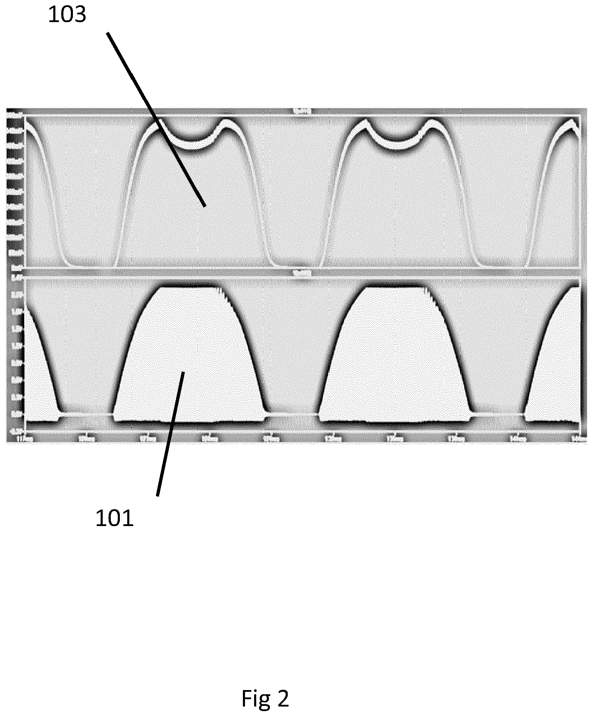

This, for example, can be shown with respect to the waveforms in Figure 2, where the average input current 103 waveform into the converter is shown, with the transistor (Q1) current waveform 101, wherein the current waveform 101 is an envelope wave (not clearly shown). As can be seen when the transistor current waveform 101 is limited shown by the flat tops of the waveforms, the load voltage is also constant as the LED forward voltage is constant, thus the load power is constant. Given the sine wave input voltage with a positive arch into the converter, the average input current waveform into the converter shows a reflected negative component produced by the -di/dt component in the input current, like a saddle shape, so as to make the constant power. However, a ballast before the rectifier bridge or a ballast inductor maintains a constant current. In other words, when the constant ballast current from the ballast is limited in passing the power switch because of the current limit in the mode power converter at that moment, the differential/excessive current between the constant ballast current and the saddle shape input current will flow to the input capacitor, and the capacitor is charged up to a higher value.

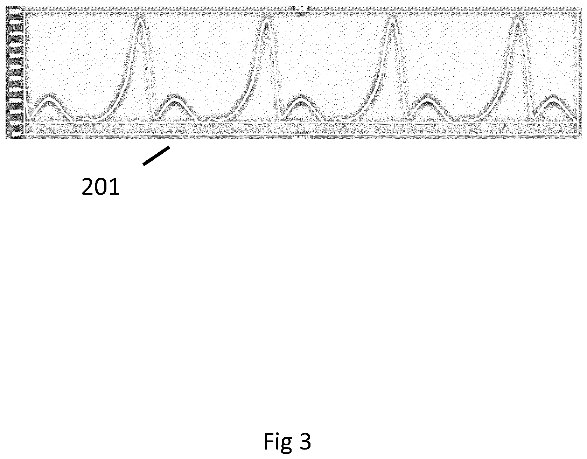

This charging of the input capacitor is shown in Figure 3, where the voltage waveform on the input capacitor C2 shows a large resonant spike.

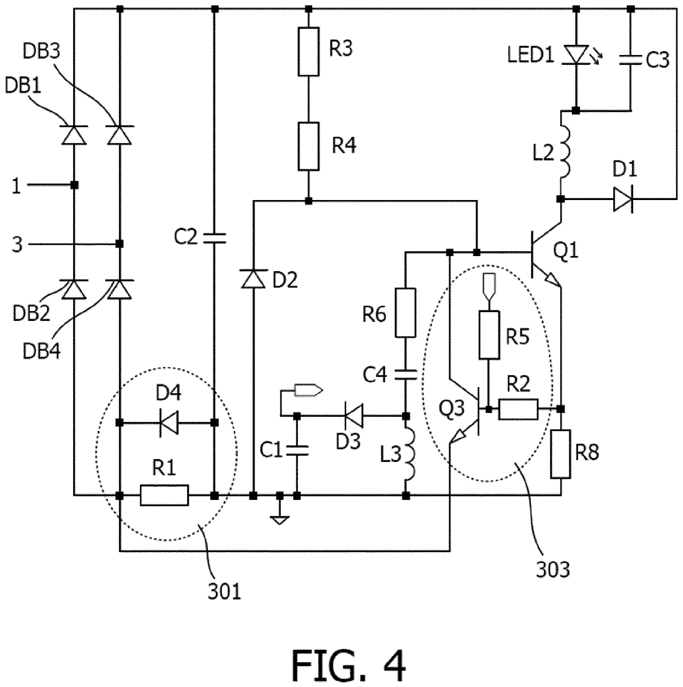

With respect to Figure 4 an example clamped peak current RCC LED driver circuit is shown according to some embodiments. The driver circuit shown in Figure 4 differs from the driver circuit shown in Figure 1 at least in that the driver circuit comprises a control element 301 configured to sense the variation of the input power. The control element 301 furthermore is coupled to an emitter of the current limiter transistor, (similarly as Q2 in Figure 1 and shown in Figure 4 as) transistor Q3, and configured to adjust or bias the emitter voltage (potential, with respect to ground) of the transistor Q3 based on the variation of the input power. In such a way the current limiter is configured to adjust the driving load limit based on the variation of the input power, in other words the emitter voltage of the current limiter is biased which produces an output with good line regulation but also high power factor and a low total harmonic distortion. The control element 301 in some embodiments comprises a resistor R1 located between the low potential input and the input capacitor C2. Furthermore it would be understood that in the examples shown herein the input capacitor C2 is located across the high potential input and low potential input via the control element 301. In these embodiments an emitter of the transistor Q3 is coupled to the low potential input, and via the resistor R1 to the ground terminal, a base of the transistor Q3 is coupled to the ground terminal via a current sensing element of the current limiter, the resistor R8, through which the driving current flows, and a collector of the transistor is coupled to a control terminal of the switched mode power converter, the base of the transistor Q1.

In other words the control element 301 is located between the input capacitor C2 and the input low potential generated by the input part (the diode bridge), and the current limiter part, and the emitter of the transistor is coupled not to the switched mode power converter low potential but to the input low potential.

The resistor R1 therefore is configured to sense the variation of the input voltage and use a signal indicative of the variation to bias the emitter voltage of Q3.

The input capacitor C2 applies a dv/dt function of the input voltage, and the current through the input capacitor C2 is proportional with the derivative $\frac{dVin(t)}{dt}$ of the input voltage. Since this current flows through the resistor R1 from right to left in the illustrated embodiment, the voltage $V_{R1}$ on R1 is proportional to a minus of the derivative $\frac{dVin(t)}{dt}$ of the input voltage.

The voltage threshold that turns on Q3 is $V_{be} + V_{R1}$, wherein Vbe is the inherent voltage drop from the base to the emitter of the transistor Q3 that turns it on.

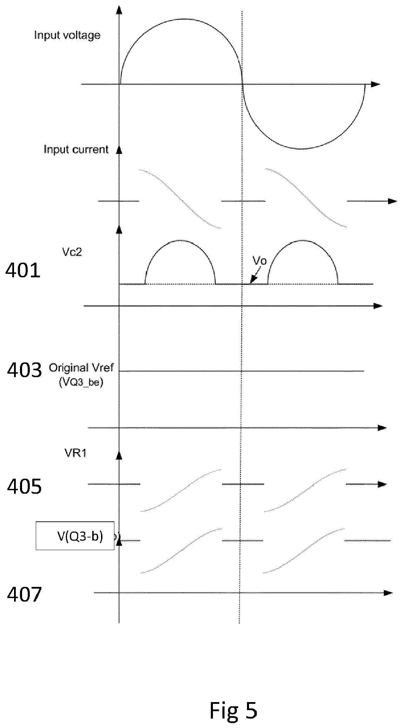

Therefore, in case the sensing resistor R8 generate a voltage that is equal to $V_{be} + V_{R1}$, Q3 will start to be conductive and will draw base current from Q1. Namely the peak current Ipeak flowing through R8 should satisfy Ipeak*$R_8 \approx V_{be} + V_{R1}$. This is shown, for example in Figure 5, which shows the potential or voltage waveform of the input capacitor ($V_{c2}$) 401, the original reference voltage ($V_{Q3\_be}$) 403 the control element resistor potential ($V_{R1}$) 405 and the potential V(Q3-b) 407 which is $V_{Q3\_be} + V_{R1}$. In other words as shown in Figure 5 the original base to emitter potential for transistor Q3 is a constant value (where the transistor is on) and this original potential is in essence the opening threshold Vbe of Q3. The voltage or potential $V_{R1}$ 405 shows that when the input voltage waveform 401 has a transient peak, the potential $V_{R1}$ has a drop, which is for keeping the power constant as described above.

At leading point of the voltage of the input power as well as on the capacitor C2, the amplitude is low but dv/dt is high, thus V_R1 is negative with a large amplitude and in turn the Vbe $+V_{R1}$ is smallest. In such a low Vbe $+V_{R1}$ as shown in curve 407, the driving current through the resistor R8 would turn on the control element Q3 early to draw more current from the base of the power switch Q1, thus the driving current is decreased/low.

As the input voltage increases in the sine shape, dv/dt decreases thus V_R1 increases. Vbe $+V_{R1}$ increases and the driving current increases in phase of the input voltage.

As the input voltage increases to the peak value, dv/dt is generally zero and V_R1 is almost zero. Vbe $+V_{R1}$ increases and the driving current is also high and in phase of the high input voltage.

This makes the peak current of Q1 follow the input voltage wave shape, thus enabling the improvement in THD and PF.

When the input voltage decreases again, $V_{R1}$ turns to positive values and Vbe $+V_{R1}$ continues to increase. But the driving current still decreases since the base of the power switch obtains less base current due to the decreasing of the input voltage. Thus the driving current is still in phase with the input voltage.

Furthermore in some embodiments the control element 301 further comprises a diode D4 located in parallel with the resistor of the control element and forwarded from the input capacitor to the low potential (in other words arranged with a cathode coupled to the low potential input). In some embodiments the diode D4 located in parallel with the resistor of the control element is configured to clamp the voltage on resistor R1 thus keeping the circuit in a normal mode of operation even when a large surge current flows through resistor R1 (for example where the circuit is exposed to a lightning strike or other abnormal condition).

The driver circuit as shown in Figure 4 furthermore differs from the driver circuit diagram in Figure 1 by an additional resistor R3 located between the resistor R4 and the high potential input.

In the driver circuit shown in Figure 4 the anode of the diode D2, one terminal of the inductor L3, and the current sensing element, the resistor R8, are coupled to ground (and therefore to one terminal of the control element 301), in other words to the low potential or second terminal of the input capacitor C2.

The driver circuit further comprises a diode D3 with the anode connected to the inductor L3 and the cathode connected to a capacitor C1. The capacitor C1 is located between the cathode of the diode D3 and the ground terminal. The capacitor C1 is charged by the inductor L3 which is coupled to the inductor L2 and is configured to provide the auxiliary power supply Vcc.

In order to achieve line regulation even under the non-constant driving current limit, the driver circuit, as shown in Figure 4, furthermore in some embodiments comprise a line regulation controller 303. The line regulation controller 303 comprises a resistor R5 located between the auxiliary power supply and the base of the current limiter transistor Q3. The current supplied by the auxiliary power supply to the resistor R5 can in some embodiments be employed to bias the base of the transistor Q3 to realize better line regulation performance. This is because when the input line voltage is high the value of the auxiliary power supply (Vcc) increases and thus increases the base current of Q1. Increasing the base current of Q1 advances the turn off moment of the RCC switch mode power supply. By advancing the turn off moment the peak current is reduced in order to balance the energy provided by the high line voltage.

For a Io=150mA, Po=20w. Vin=220Vac application, the value R1 can be selected around several ohms and D1 can be 1kv, 1A fast recovery diode.

It would be noted the position of the control element 301 is not limited to the position shown in Figure 4. For example in some embodiments the control element can be placed at other suitable positions to detect the variation of the input power, for example, the control element 301 may be placed at the high potential input and coupled to the emitter of the transistor in a proper connection.

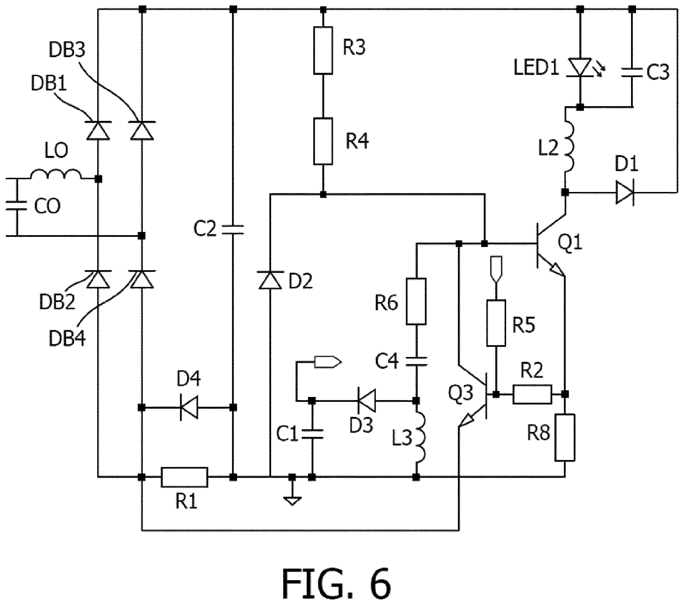

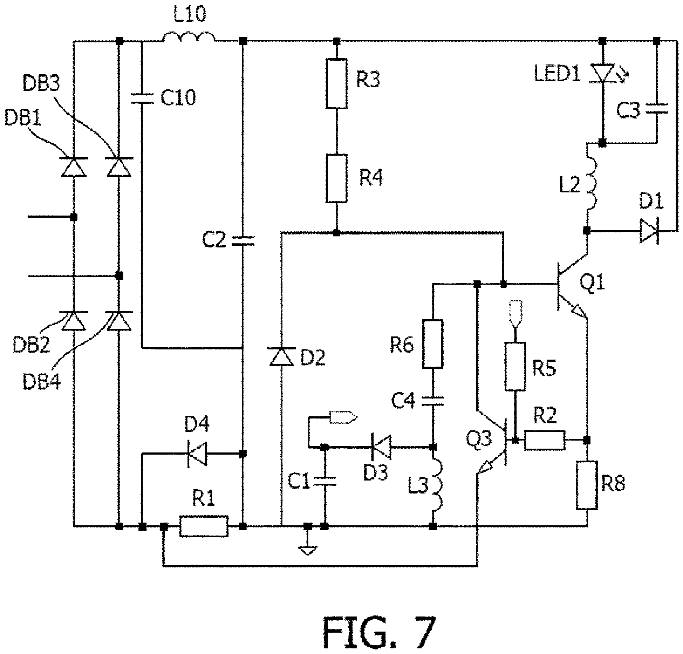

Figures 6 and Figure 7 show how an electromagnetic interference (EMI) filter can be integrated with the embodiment of the invention. In Figure 6, the EMI filter comprising the capacitor C0 and inductor L0 can be placed before the rectifier bridge. Alternatively, in Figure 7, the EMI filter comprising the capacitor C10 and inductor L10 can be placed between the rectifier bridge and the input capacitor C2. Capacitor C10 is coupled between the high potential input and the ground.

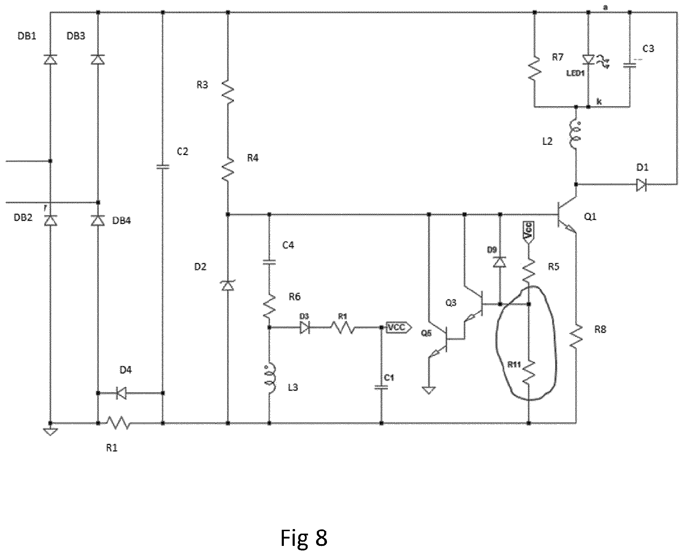

Figure 8 shows an alternative circuit in another embodiment of the invention. The main difference on the circuit in figure 8 over the circuit in the above circuit is how the resistor R1 connects to the control element Q3. In the above circuits the control element Q3 is biased at its emitter terminal and is emitter driven. In the circuit in figure 8, the resistor R11 connects to the base terminal and in turn is configured to base-drive the control element Q3.

An auxiliary power supply Vcc is generated based on the voltage of the input power. More specifically, the auxiliary winding L3 generates a voltage that is inductive from the voltage in the primary winding L2 which depends on the voltage of the input power. This voltage on the auxiliary winding L3 is smoothed by the capacitor C1 and provides the auxiliary power supply Vcc. Normally Vcc can be calculated as below:

$$Vcc := \left( \frac{Naux}{Npri} \cdot (Vin - Vout) \right) - Vf\_D3 - V\_R1$$

Wherein Naux is the number of coils in the auxiliary winding L3, Npri is the number of coils in the auxiliary winding L3, Vin is the input voltage, Vout is the output voltage, Vf_D3 is the forward voltage of the diode D3, and V_R1 is the voltage drop on R1.

Vcc is almost fixed. With the circuit shown in figure 8, resistors R5 & R11 form a potential divider biasing for a high gain transistor, which can be also implemented by a Darlington pair (Q3 & Q5) as shown. The basing voltage V_bias of the transistor Q3, Q5 (Darlington pair) is dependent upon Vcc and the value of resistor R5 and R11.

$$V\_bias = Vcc\frac{R11}{R5 + R11}$$

Thus V bias is almost fixed.

And the Vbe of the control element Q1 can be formulated as

$$Vbe(t) = V_{bias} + V\_R1(t)$$

The voltage across the resistor R1 is proportional with the derivative of the input voltage, since the capacitor C5 applies a dv/dt function. More specifically:

$$V\_R1(t) = R1 \times C2 \times \frac{dVin(t)}{dt}$$

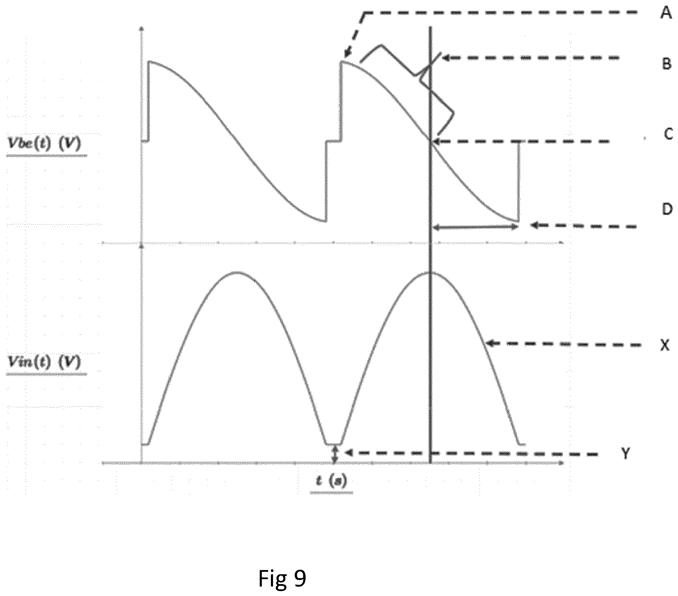

Figure 9 shows the schematic curve of the input voltage Vin(t) and the Vbe(t). At Y point of the voltage of the input power, the amplitude is low but dv/dt is high, thus V_R1 is high and in turn the Vbe is high. Such a high Vbe as shown by A point would turn on the control element Q3 early to draw more current from the base of the power switch, thus the driving current is decreased/low.

As the input voltage increases in the sine shape, dv/dt decreases thus V_R1 also decreases as shown by section B. Vbe decreases and the driving current increases in phase with the input voltage.

As the input voltage increases to the peak value, dv/dt is generally zero and V_R1 is almost zero as shown by point C. Vbe decreases and the driving current is also high and in phase of the input voltage.

This makes the peak current of Q1 follow the input voltage wave shape, thus enabling the improvement in THD and PF.

When the input voltage decreases again, the Vbe continues to decrease. But the driving current still decreases since the base of the power switch obtains less base current due to the decreasing of the input voltage. Thus the driving current is still in phase with the input voltage.

Further as described above the equation

$$Vcc := \left(\frac{Naux}{Npri} \cdot (Vin - Vout)\right) - Vf\_D3 - V\_R1$$ Vcc is also a function of input voltage. Normally

,

Vcc is constant for a certain nominal voltage of the input mains (regardless of the sine wave variation of the input mains). But if the input line voltage nominal value changes such as increasing from 220V nominal value to 240 or 260 nominal value, then Vcc also increases and in turn Vbe increases to lower the driving current, and this enables having a desired line regulation performance by selection of a proper turn ratio and proper resistance values of biasing resistors R5 and R11.

Resistors R5 and R11 can be also replaced by a combination of resistors and thermal dependent resistors such as Negative Temperature Coefficient (NTC) or Positive Temperature Coefficient (PTC) resistors to achieve desired thermal compensation or thermal deregulation if required.

The above exemplary embodiment is not limited to using a buck converter and can easily apply to other topologies. The embodiment of the invention covers using a resistor in the line between the input capacitor and input to sense the variation of the input power, and such variation is used by the control element to configure the current limiter,

While the invention has been illustrated and described in detail in the drawings and foregoing description, such illustration and description are to be considered illustrative or exemplary and not restrictive; the invention is not limited to the disclosed embodiments.

For example, it is possible to operate the invention in an embodiment wherein the current limiter comprises more than one controllable switch, for example the current limiter comprises a Darlington bridge constituted by two or more controllable switches. Any reference signs in the claims should not be construed as limiting the scope.

**Claims**

1. A driver circuit, comprising:

an input comprising a high potential input and a low potential input, the input being adapted to receive an input power;

an input capacitor (C2) coupled across the high potential input and the low potential input and adapted to buffer the input power;

a switched mode power converter (7) coupled to the input capacitor (C2), the switched mode power converter (7) being adapted to supply a driving current to a light emitting diode arrangement (LED1) from the buffered input power;

a current limiter (9) coupled to the switched mode power converter, wherein the current limiter (9) is configured to control the switched mode power converter (7) to limit the driving current at a driving load limit, wherein the current limiter (9) comprises a controllable switch (Q3) configured to control the switched mode power converter via operating a power switch (Q1) of the switched mode power converter (7);

**characterized in that** the driver circuit further comprises a control element (301) configured to sense a variation of the input power, the control element (301) coupled to the controllable switch (Q3) and configured to adjust or bias an emitter voltage of the controllable switch (Q3) based on the variation of the input power, such that the current limiter (9) is configured to adjust the driving load limit based on the variation of the input power, wherein said control element (301) comprises a current sensing element (R1) coupled in series between the input capacitor (C2) and either the high potential input or the low potential input.

2. A driver circuit as claimed in claim 1, wherein the switched mode power converter (7) comprises a ringing choke converter, and/or said current sensing element (R1) is adapted to sense a variation rate of a voltage of the input power.

3. A driver circuit as claimed in claim 1, wherein the current limiter (9) is coupled to the current sensing element (R1) and is configured to increase the driving load limit when a variation rate of the input power is low and configured to decrease the driving load limit when the variation rate of the input power is high.

4. A driver circuit as claimed in claim 1, wherein the current sensing element comprises a resistor (R1) in series between the low potential input and the input capacitor (C2), and a current output terminal of the controllable switch (Q3) is coupled to a ground terminal via the resistor (R1) and to the low potential input, one end of the input capacitor (C2) is connected to the ground terminal, a control terminal of the controllable switch (Q3) is coupled to the ground terminal via a current sensing element (R8) of the current limiter through which the driving current flows, and a current input terminal of the controllable switch (Q3) is coupled to a control terminal of the power switch (Q1) of the switched mode power converter.

5. A driver as claimed in claim 1, wherein the current sensing element comprises a resistor (R1) in series between the low potential input and the input capacitor (C2), the low potential input connected to a ground terminal, and a control terminal of the controllable switch (Q3) is coupled to the ground and the low potential input via the resistor (R1) and is coupled to one end of the input capacitor (C2).

6. A driver as claimed in claim 5, wherein the said control terminal of the controllable switch (Q3) is isolated from the driving current.

7. A driver circuit as claimed in claim 1, wherein the current sensing element comprises a diode (D4) in parallel with a resistor (R1) in series between the low potential input and the input capacitor (C2), and said diode is forwarded from the input capacitor (C2) to the low potential input.

8. A driver circuit as claimed in any of claims 1 to 2 or 4, further comprising a line regulation controller (303), the line regulation controller (303) configured to:

- sense a voltage of the input power;
- obtain a bias voltage that increases as the voltage of the input power increases and;
- bias a control terminal of the controllable switch based on the voltage of the input power via providing at the control terminal the bias voltage,

wherein the line regulation controller (303) is adapted to obtain an auxiliary power supply (Vcc) as the bias voltage, and comprises a control terminal biasing resistor (R5) located between the auxiliary power supply (Vcc) and the control terminal of the controllable switch (Q3), the auxiliary power supply (Vcc) is based on the voltage of the input power,

wherein the driver circuit further comprises:

a choke inductor (L2) in series with the power switch (Q1) of the switched mode power converter;
an auxiliary winding (L3) coupled to said choke inductor (L2), said auxiliary winding (L3) being adapted to provide the auxiliary power supply (Vcc).

**9.** A driver circuit as claimed in claim 1, further comprising a diode (D9) forwarded from a control terminal of the current limiter (9) to a control terminal of the power switch (Q1) of the switched mode power converter.

**10.** A lighting circuit, comprising:

a driver circuit as claimed in any of claims 1 to 9; and
an light emitting diode arrangement (LED1) coupled to the switched mode power converter (7) of the driver circuit, wherein the driver circuit further comprises a smoothing capacitor (C3) across the light emitting diode arrangement (LED1).

**Patentansprüche**

**1.** Treiberschaltung, umfassend:

einen Eingang, der einen Hochpotentialeingang und einen Niederpotentialeingang umfasst, wobei der Eingang dazu geeignet ist, eine Eingangsleistung aufzunehmen;
einen Eingangskondensator (C2), der über dem Hochpotentialeingang und dem Niederpotentialeingang gekoppelt und dazu geeignet ist, die Eingangsleistung zu puffern;
einen Schaltleistungswandler (7), der mit dem Eingangskondensator (C2) gekoppelt ist, wobei der Schaltleistungswandler (7) dazu geeignet ist, eine Leuchtdiodenanordnung (LED1) aus der gepufferten Eingangsleistung mit einem Antriebsstrom zu versorgen;
einen Strombegrenzer (9), der mit dem Schaltleistungswandler gekoppelt ist, wobei der Strombegrenzer (9) dazu ausgebildet ist, den Schaltleistungswandler (7) so zu steuern, dass der Antriebsstrom auf eine Antriebslastgrenze begrenzt wird, wobei der Strombegrenzer (9) einen steuerbaren Schalter (Q3) umfasst, der dazu ausgebildet ist, den Schaltleistungswandler durch Betätigen eines Leistungsschalters (Q1) des Schaltleistungswandlers (7) zu steuern;
**dadurch gekennzeichnet, dass** die Treiberschaltung weiter ein Steuerelement (301) umfasst, das dazu ausgebildet ist, eine Änderung der Eingangsleistung zu erfassen, das Steuerelement (301) mit dem steuerbaren Schalter (Q3) gekoppelt und dazu ausgebildet ist, eine Emitterspannung des steuerbaren Schalters (Q3) auf Basis der Änderung der Eingangsleistung derart anzupassen oder vorzuspannen, dass der Strombegrenzer (9) dazu ausgebildet ist, die Antriebslastgrenze auf Basis der Änderung der Eingangsleistung anzupassen, wobei das Steuerelement (301) ein Stromerfassungselement (R1) umfasst, das zwischen dem Eingangskondensator (C2) und entweder dem Hochpotentialeingang oder dem Niederpotentialeingang in Reihe geschaltet ist.

**2.** Treiberschaltung nach Anspruch 1, wobei der Schaltleistungswandler (7) einen Ringing-Choke-Wandler umfasst, und/oder das Stromerfassungselement (R1) dazu geeignet ist, eine Änderungsrate einer Spannung der Eingangsleistung zu erfassen.

**3.** Treiberschaltung nach Anspruch 1, wobei der Strombegrenzer (9) mit dem Stromerfassungselement (R1) gekoppelt ist und dazu ausgebildet ist, die Antriebslastgrenze zu steigern, wenn eine Änderungsrate der Eingangsleistung niedrig ist, und dazu ausgebildet ist, die Antriebslastgrenze zu senken, wenn die Änderungsrate der Eingangsleistung hoch ist.

**4.** Treiberschaltung nach Anspruch 1, wobei das Stromerfassungselement einen Widerstand (R1) umfasst, der zwischen dem Niederpotentialeingang und dem Eingangskondensator (C2) in Reihe geschaltet ist, und ein Stromausgangsanschluss des steuerbaren Schalters (Q3) über den Widerstand (R1) mit einem Masseanschluss und mit dem Niederpotentialeingang gekoppelt ist, ein Ende des Eingangskondensators (C2) mit dem Masseanschluss verbunden ist, ein Steueranschluss des steuerbaren Schalters (Q3) über ein Stromerfassungselement (R8) des Strombegrenzers, durch das der Antriebsstrom fließt, mit dem Masseanschluss gekoppelt ist, und ein Stromeingangsanschluss des steuerbaren Schalters (Q3) mit einem Steueranschluss des Leistungsschalters (Q1) des Schaltleistungswandlers gekoppelt ist.

**5.** Treiber nach Anspruch 1, wobei das Stromerfassungselement einen Widerstand (R1) umfasst, der zwischen dem Niederpotentialeingang und dem Eingangskondensator (C2) in Reihe geschaltet ist, der Niederpotentialeingang mit einem Masseanschluss verbunden, und ein Steueranschluss des steuerbaren Schalters (Q3) über den Widerstand (R1) mit der Masse und dem Niederpotentialeingang gekoppelt ist und mit einem Ende des Eingangskondensators (C2) gekoppelt ist.

**6.** Treiber nach Anspruch 5, wobei der Steueranschluss des steuerbaren Schalters (Q3) vom Antriebsstrom isoliert ist.

**7.** Treiberschaltung nach Anspruch 1, wobei das Stromerfassungselement eine Diode (D4) umfasst, die mit einem zwischen dem Niederpotentialeingang und dem Eingangskondensator (C2) in Reihe geschalteten Widerstand (R1) parallelgeschaltet ist, und die Diode vom Eingangskondensator (C2) zum Niederpotentialeingang durchgeleitet wird.

**8.** Treiberschaltung nach einem der Ansprüche 1 bis 2 oder 4, weiter eine Leitungsregelungssteuerung (303) umfassend, wobei die Leitungsregelungssteuerung (303) dazu ausgebildet ist:

- eine Spannung der Eingangsleistung zu erfassen;
- eine Vorspannung zu erhalten, die steigt, wenn die Spannung der Eingangsleistung steigt; und
- auf Basis der Spannung der Eingangsleistung durch Bereitstellen der Vorspannung am Steueranschluss einen Steueranschluss des steuerbaren Schalters vorzuspannen,

wobei die Leitungsregelungssteuerung (303) dazu geeignet ist, eine Hilfsleistungsversorgung (Vcc) als die Vorspannung zu erhalten, und einen Steueranschluss-Vorspannungswiderstand (R5) umfasst, der sich zwischen der Hilfsleistungsversorgung (Vcc) und dem Steueranschluss des steuerbaren Schalters (Q3) befindet, die Hilfsleistungsversorgung (Vcc) auf der Spannung der Eingangsleistung basiert,
wobei die Treiberschaltung weiter umfasst:

eine Drosselinduktivität (L2), die mit dem Leistungsschalter (Q1) des Schaltleistungswandlers in Reihe geschaltet ist;
eine Hilfswicklung (L3), die mit der Drosselinduktivität (L2) gekoppelt ist, wobei die Hilfswicklung (L3) dazu geeignet ist, die Hilfsleistungsversorgung (Vcc) bereitzustellen.

**9.** Treiberschaltung nach Anspruch 1, die weiter eine Diode (D9) umfasst, welche von einem Steueranschluss des Strombegrenzers (9) zu einem Steueranschluss des Leistungsschalters (Q1) des Schaltleistungswandlers durchgeleitet wird.

**10.** Beleuchtungsschaltung, umfassend:

eine Treiberschaltung nach einem der Ansprüche 1 bis 9; und
eine Leuchtdiodenanordnung (LED1), die mit dem Schaltleistungswandler (7) der Treiberschaltung gekoppelt ist, wobei die Treiberschaltung weiter einen Glättungskondensator (C3) über der Leuchtdiodenanordnung (LED1) umfasst.

## Revendications

**1.** Circuit d'attaque, comprenant :

une entrée comprenant une entrée de potentiel élevé et une entrée de potentiel faible, l'entrée étant adaptée pour recevoir une puissance d'entrée ;
un condensateur d'entrée (C2) couplé à travers l'entrée de potentiel élevé et l'entrée de potentiel faible et adapté pour mettre en tampon la puissance d'entrée ;
un convertisseur de puissance en mode commuté (7) couplé au condensateur d'entrée (C2), le convertisseur de puissance en mode commuté (7) étant adapté pour fournir un courant d'attaque à un agencement de diodes électroluminescentes (DEL1) à partir de la puissance d'entrée en tampon;
un limiteur de courant (9) couplé au convertisseur de puissance en mode commuté, dans lequel le limiteur de courant (9) est configuré pour commander le convertisseur de puissance en mode commuté (7) pour limiter le courant d'attaque à une limite de charge d'attaque, dans lequel le limiteur de courant (9) comprend un commutateur pouvant être commandé (Q3) configuré pour commander le convertisseur de puissance en mode commuté via l'actionnement d'un commutateur de puissance (Q1) du convertisseur de puissance en mode commuté (7) ;

**caractérisé en ce que** le circuit d'attaque comprend en outre un élément de commande (301) configuré pour détecter une variation de la puissance d'entrée, l'élément de commande (301) couplé au commutateur pouvant être commandé (Q3) et configuré pour régler ou polariser une tension d'émetteur du commutateur pouvant être commandé (Q3) sur la base de la variation de la puissance d'entrée, de telle sorte que le limiteur de courant (9) est configuré pour régler la limite de charge d'attaque sur la base de la variation de la puissance d'entrée, dans lequel ledit élément de commande (301) comprend un élément de détection de courant (R1) couplé en série entre le condensateur d'entrée (C2) et soit l'entrée de potentiel élevé soit l'entrée de potentiel faible.

2. Circuit d'attaque selon la revendication 1, dans lequel le convertisseur de puissance en mode commuté (7) comprend un convertisseur à transfert indirect auto-oscillant, et/ou ledit élément de détection de courant (R1) est adapté pour détecter un taux de variation d'une tension de la puissance d'entrée.

3. Circuit d'attaque selon la revendication 1, dans lequel le limiteur de courant (9) est couplé à l'élément de détection de courant (R1) et est configuré pour augmenter la limite de charge d'attaque lorsqu'un taux de variation de la puissance d'entrée est faible et configuré pour réduire la limite de charge d'attaque lorsque le taux de variation de la puissance d'entrée est élevé.

4. Circuit d'attaque selon la revendication 1, dans lequel l'élément de détection de courant comprend une résistance (R1) en série entre l'entrée de potentiel élevé et le condensateur d'entrée (C2), et une borne de sortie de courant du commutateur pouvant être commandé (Q3) est couplée à une borne de terre via la résistance (R1) et à l'entrée de potentiel faible, une extrémité du condensateur d'entrée (C2) est connectée à la borne de terre, une borne de commande du commutateur pouvant être commandé (Q3) est couplée à la borne de terre via un élément de détection de courant (R8) du limiteur de courant à travers lequel circule le courant d'attaque, et une borne d'entrée de courant du commutateur pouvant être commandé (Q3) est couplée à une borne de commande du commutateur d'alimentation (Q1) du convertisseur de puissance en mode commuté.

5. Dispositif d'attaque selon la revendication 1, dans lequel l'élément de détection de courant comprend une résistance (R1) en série entre l'entrée de potentiel élevé et le condensateur d'entrée (C2), l'entrée de potentiel faible connectée à une borne de terre, et une borne de commande du commutateur pouvant être commandé (Q3) est couplée à la terre et à l'entrée de potentiel faible via la résistance (R1) et est couplée à une extrémité du condensateur d'entrée (C2).

6. Dispositif d'attaque selon la revendication 5, dans lequel ladite borne de commande du commutateur pouvant être commandé (Q3) est isolée du courant d'attaque.

7. Circuit d'attaque selon la revendication 1, dans lequel l'élément de détection de courant comprend une diode (D4) en parallèle avec une résistance (R1) en série entre l'entrée de potentiel faible et le condensateur d'entrée (C2), et ladite diode est transférée du condensateur d'entrée (C2) à l'entrée de potentiel faible.

8. Circuit d'attaque selon l'une quelconque des revendications 1 à 2 ou 4, comprenant en outre un dispositif de commande de régulation de ligne (303), le dispositif de commande de régulation de ligne (303) étant configuré pour :

   - détecter une tension de la puissance d'entrée ;
   - obtenir une tension de polarisation qui augmente lorsque la tension de la puissance d'entrée augmente ; et
   - polariser une borne de commande du commutateur pouvant être commandé sur la base de la tension de la puissance d'entrée par application de la tension de polarisation au niveau de la borne de commande,

   dans lequel le dispositif de commande de régulation de ligne (303) est adapté pour obtenir une alimentation électrique auxiliaire (Vcc) en tant que tension de polarisation, et comprend une résistance de polarisation de borne de commande (R5) située entre l'alimentation électrique auxiliaire (Vcc) et la borne de commande du commutateur pouvant être commandé (Q3), l'alimentation électrique auxiliaire (Vcc) est basée sur la tension de la puissance d'entrée, dans lequel le circuit d'attaque comprend en outre :

   un inducteur de bobine d'arrêt (L2) en série avec le commutateur de puissance (Q1) du convertisseur de puissance en mode commuté ;

un enroulement auxiliaire (L3) couplé audit inducteur de bobine d'arrêt (L2), ledit enroulement auxiliaire (L3) étant adapté pour fournir l'alimentation électrique auxiliaire (Vcc).

9. Circuit d'attaque selon la revendication 1, comprenant en outre une diode (D9) transférée d'une borne de commande du limiteur de courant (9) à une borne de commande du commutateur d'alimentation (Q1) du convertisseur de puissance en mode commuté.

10. Circuit d'éclairage, comprenant :

un circuit d'attaque selon l'une quelconque des revendications 1 à 9 ; et
un agencement de diodes électroluminescentes (DEL1) couplé au convertisseur de puissance en mode commuté (7) du circuit d'attaque, dans lequel le circuit d'attaque comprend en outre un condensateur de filtrage (C3) sur l'agencement de diodes électroluminescentes (DEL1).

FIG. 1

103

101

Fig 2

201

Fig 3

FIG. 4

Fig 5

FIG. 6

FIG. 7

Fig 8

Fig 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010106375 A
- EP 2381742 A2
- US 2014117964 A1